# EUROPEAN PATENT APPLICATION

(11) **EP 4 851 703 A1**
(43) Date of publication of application: **09.12.2026**
(21) Application number: 25748242.2
(22) Date of filing: 21.01.2025
(51) Int. Cl.: G02F 1/09, H01F 10/30

(54) **MAGNETIC DOMAIN STRUCTURE**

(30) Priority: 29.01.2024 JP 2024011108
(71) Applicant: SHIN-ETSU CHEMICAL CO., LTD., Tokyo 100-0005 (JP); Tohoku University, Sendai-shi, Miyagi 980-8577 (JP)
(72) Inventor: GOTO Taichi, Sendai-shi, Miyagi 980-8577 (JP); WATANABE Toshiaki, Annaka-shi, Gunma 379-0195 (JP)
(74) Representative: Schicker, Silvia
(86) International application number: PCT/JP2025/001702
(87) International publication number: WO 2025/164433

(57) **Abstract**

The present invention is a magnetic domain structure including a multilayer film on a support substrate, the multilayer film including a plurality of dielectric layers and a plurality of magnetic insulator layers stacked alternately, in which the support substrate, the dielectric layers, and the magnetic insulator layers are all made of a material having a garnet structure. The magnetic domain structure includes a first multilayer film on the support substrate in which the plurality of dielectric layers and the plurality of magnetic insulator layers are stacked alternately, a defect layer formed on the first multilayer film and comprised of the magnetic insulator layer that is thicker than a single layer from the magnetic insulator layers in the first multilayer film, and a second multilayer film on the defect layer in which the plurality of dielectric layers and the plurality of magnetic insulator layers are stacked alternately, in which in an environment without a magnetic field, a magnetic domain having a width of 200 nm or more in which magnetization is oriented in a direction perpendicular to a surface of the support substrate is exhibited. This provides a magnetic domain structure that can serve as a magnetic domain structure having high light transmittance and a large magneto-optical effect while exhibiting the magnetic domain having a size comparable to the wavelength of the light to be used.

## Description

### TECHNICAL FIELD

The present invention relates to a magnetic domain structure.

### BACKGROUND ART

With the recent development of the advanced information society, devices employing magnetism have been widely used and are receiving renewed attention. The magnetic devices have played a significant role as storage media such as hard disk drives and tape recorders for a long time, and such utilization has been driven by the characteristics of magnetism, including non-volatility, stability, and robustness. In addition to these characteristics, development has been progressing in recent years on applied devices that utilize the properties of high-speed operation and the freedom of shape of magnetism. These characteristics are useful when employed in optical communications and optical devices, and applications for high-speed displays, optical memories, high-speed laser switches, and others are advancing. In magnetic materials in these magnetic devices, magnetic patterns within the magnetic materials exist and are referred to as magnetic domains. The successful control thereof has great importance.

Magnetic domains are minute regions present within the magnetic material, and magnetic moments (which can be regarded as small magnets) in these regions are aligned in a uniform direction. The presence of the magnetic domains is a natural phenomenon for a magnetic material to achieve a minimum energy state. This characteristic is exhibited only when employing magnetic materials and is a highly unique feature that cannot be found in other materials utilizing electrical properties.

The use of magnetic domains makes it possible to modulate the traveling direction of light and induce phase interference (holography), enabling applications such as three-dimensional displays, optical holographic memories, and laser switches. In order to realize such devices, the following three properties are required for the magnetic materials. Firstly, the magnetic domains having a size comparable to a wavelength of light are present within the magnetic materials. Secondly, the magneto-optical effect is strong, in which the effect represents the extent of light modulation by magnetism. Thirdly, light transmittance is high. As no material having all of these properties at the same time exists in nature, this has been an obstacle to the development of the optical devices described above.

In general, magnetic materials are produced on substrates by forming films having a film shape. During this formation, a stress and strain originating from a difference in atomic size and molecular size between the substrates is introduced in films, and magnetic anisotropy energy originating therefrom is accumulated therein. As a result, a direction perpendicular to the film surface becomes a magnetic easy axis, and magnetic domains are developed. As the films become thicker, the stress and strain become smaller, leading to a smaller magnetic anisotropy energy. Accordingly, the magnetic domains are less likely to be formed in the magnetic materials having a large film thickness.

In addition, in order to enhance light transmittance, a method for reducing a film thickness is a simple means. On the other hand, in order to increase the magneto-optical effect, a typical method therefor is to increase the film thickness of this magnetic material.

That is, under these circumstances, it is theoretically impossible to produce a device employing magnetic domains and light based solely on the magnitude of the film thickness.

Non Patent Documents 1, 2, and 3 disclose a three-dimensional display, an optical holographic memory, and a laser switch using a magneto-optical material.

Non Patent Document 1 is a paper disclosing that a three-dimensional image can be output by writing a hologram pattern for a three-dimensional display into a magneto-optical material. Non Patent Document 1 discloses that the material used therein can generate magnetic domains perpendicular to a film surface, and thus, an image as shown in FIG. 5 of Non Patent Document 1 can be displayed. However, the brightness of the image is dark, and the display has not been commercialized. This is because a material having both a large magneto-optical effect and a high transmittance while having magnetic domains has not been produced.

Non Patent Document 2 is a paper disclosing an application example of a magneto-optical material to a magneto-optical hologram memory. Non Patent Document 2 discloses that by focusing and applying light to a magnetic garnet film that is a magneto-optical material, arbitrarily shaped magnetic domains are formed, and a magneto-optical holographic memory is then produced using these magnetic domains. As a magneto-optical effect of the magneto-optical material used therein is larger and transmittance of the material is higher, the error rate thereof is decreased, and the amount of information recordable therein is increased.

Non Patent Document 3 discloses an application example of a magneto-optical material to an optical switch referred to as a Q switch of a laser. By inserting a magneto-optical material having magnetic domains into an optical resonator, it is found that this material functions as the Q switch, leading to the development of a kilowatt-class high-power laser.

### CITATION LIST

### PATENT LITERATURE

Patent Document 1: JP 2001-194639 A

### NON PATENT LITERATURE

Non Patent Document 1: Hiroyuki Takagi, Kazuki Nakamura, Sotaro Tsuda, Taichi Goto, Pang Boey Lim and Mitsuteru Inoue, "Magneto-optic three-dimensional holographic display with tiling optical addressing method", Sensors and Materials, 27, 1003-1008 (2015/11/11).
Non Patent Document 2: Yuichi Nakamura, Zen Shirakashi, Hiroyuki Takagi, Pang Boey Lim, Taichi Goto, Hironaga Uchida and Mitsuteru Inoue, "Error-free reconstruction of magnetic hologram via improvement of recording conditions in collinear optical system", Optics Express, 25, 15349-15357 (2017/06/26).
Non Patent Document 3: Taichi Goto, Ryohei Morimoto, John W. Pritchard, Mani Mina, Hiroyuki Takagi, Yuichi Nakamura, Pang Boey Lim, Takunori Taira and Mitsuteru Inoue, "Magneto-optical Q-switching using magnetic garnet film with micromagnetic domains", Optics Express, 24, 17635-17643 (2016/07/25).
Non Patent Document 4: Hideki Kato, Takeshi Matsushita, Akio Takayama, Motoji Egawa, Kazuhiro Nishimura and Mitsuteru Inoue, "Theoretical analysis of optical and magneto-optical properties of one-dimensional magnetophotonic crystals", Journal of Applied Physics, 93, 3906-3911 (2003/04/01)

### SUMMARY OF INVENTION

### TECHNICAL PROBLEM

As described above, in order to develop magneto-optical devices (such as a three-dimensional display, an optical hologram memory, and a laser switch) using light having wavelengths in a near-ultraviolet region, a visible region, and a near-infrared region, high light transmittance and a large Faraday rotation angle (a magnitude of a magneto-optical effect of transmitted light through a magnetic material) are required while exhibiting magnetic domains having a size comparable to the wavelength of the light to be used. However, these conditions have not been solved by solely increasing a film thickness of the magnetic material to be used.

The present invention has been made in view of the above-described problem. An object of the present invention is to provide a magnetic domain structure having high light transmittance and a large magneto-optical effect while exhibiting a magnetic domain having a size comparable to a wavelength of the light, the light being used for the magnetic domain structure.

### SOLUTION TO PROBLEM

To achieve the above object, the present invention provides a magnetic domain structure including a multilayer film on a support substrate, the multilayer film including a plurality of dielectric layers and a plurality of magnetic insulator layers stacked alternately, wherein
the support substrate, the dielectric layers, and the magnetic insulator layers are all made of a material having a garnet structure,
the magnetic domain structure comprises:
   a first multilayer film on the support substrate in which the plurality of dielectric layers each having a constant thickness and the plurality of magnetic insulator layers each having a constant thickness are stacked alternately;
   a defect layer formed on the first multilayer film and comprised of the magnetic insulator layer that is thicker than a single layer from the magnetic insulator layers in the first multilayer film; and
   a second multilayer film on the defect layer in which the plurality of dielectric layers and the plurality of magnetic insulator layers are stacked alternately, the dielectric layers and the magnetic insulator layers each having a thickness equivalent to the respective thicknesses of the dielectric layers and the magnetic insulator layers in the first multilayer film, wherein
   in an environment without a magnetic field, a magnetic domain having a width of 200 nm or more in which magnetization is oriented in a direction perpendicular to a surface of the support substrate is exhibited.

Such a magnetic domain structure can serve as a magnetic domain structure having a high light transmittance and a large magneto-optical effect while exhibiting the magnetic domain having a size comparable to the wavelength of the light to be used.

Here, the thickness of the defect layer is preferably twice the thickness of a single layer from the magnetic insulator layers in the first multilayer film.

By making the thickness of the defect layer twice the thickness in this way, the defect layer can function more effectively, and the high light transmittance and the large magneto-optical effect can be obtained.

Moreover, the support substrate is preferably made of gadolinium gallium garnet,
the dielectric layers are preferably made of gadolinium gallium garnet, and
the magnetic insulator layers are preferably made of cerium-substituted yttrium iron garnet.

In the inventive magnetic domain structure, these materials can be suitably used.

In this case, the gadolinium gallium garnet can be unsubstituted with respect to gadolinium, or the gadolinium can be partially substituted with another element.

Thus, in the inventive magnetic domain structure, the gadolinium gallium garnet, which is either unsubstituted or substituted, can be employed.

Moreover, in the inventive magnetic domain structure, it is preferable that in the first multilayer film and the second multilayer film, when a refractive index of each of the dielectric layers is defined as "n1" and a refractive index of each of the magnetic insulator layers is defined as "n2", the thickness "t1" [nm] of each of the dielectric layers and the thickness "t2" [nm] of each of the magnetic insulator layers are represented by the following equations: $t 1 = λ / \left(4\times n1\right) ,$ and $t 2 = λ / \left(4\times n2\right)$ wherein λ is a design wavelength [nm] to be used for the magnetic domain structure.

By designing the thickness of each layer in this way based on the wavelength of the light being used for the magnetic domain structure, a more preferred aspect of the magnetic domain structure can be provided.

Moreover, all of the respective normals to crystal planes of the support substrate, the dielectric layers, and the magnetic insulator layers are preferably oriented in a <111> direction.

By providing such a crystal plane structure, a more preferred aspect of the magnetic domain structure can be provided.

Moreover, a reflective film can be disposed on one side of the support substrate opposite to the first multilayer film.

By disposing such a reflective film, the inventive magnetic domain structure can also serve as a magnetic domain structure operating on a reflected light.

### ADVANTAGEOUS EFFECTS OF INVENTION

The inventive magnetic domain structure can serve as a magnetic domain structure having the high light transmittance and the large magneto-optical effect while exhibiting the magnetic domain having a size comparable to the wavelength of the light to be used.

### BRIEF DESCRIPTION OF DRAWINGS

[FIG. 1] is a schematic cross-sectional view illustrating an example of a magnetic domain structure according to the present invention.
[FIG. 2] is a cross-sectional TEM image of a magnetic domain structure produced in Example.
[FIG. 3] is a photograph observing a surface of a magnetic domain structure (a surface of a second multilayer film) produced in Example, the observation being performed using a polarizing microscope in a zero-magnetic field, being 0 Oe.
[FIG. 4] is a photograph observing a surface of a magnetic domain structure (a surface of a second multilayer film) produced in Example, the observation being performed using a polarizing microscope in a magnetic field at 350 Oe.
[FIG. 5] is a graph showing results of measuring transmittance and a Faraday rotation angle by entering light perpendicular to a surface of a magnetic domain structure (a surface of a second multilayer film) produced in Example.

### DESCRIPTION OF EMBODIMENTS

Hereinafter, embodiments of the present invention will be described. However, the present invention is not limited thereto.

The present invention is a magnetic domain structure including a multilayer film on a support substrate, the multilayer film including a plurality of dielectric layers and a plurality of magnetic insulator layers stacked alternately, in which the support substrate, the dielectric layers, and the magnetic insulator layers are all made of a material having a garnet structure, the magnetic domain structure includes a first multilayer film on the support substrate in which the plurality of dielectric layers each having a constant thickness and the plurality of magnetic insulator layers each having a constant thickness are stacked alternately, a defect layer formed on the first multilayer film and comprised of the magnetic insulator layer that is thicker than a single layer from the magnetic insulator layers in the first multilayer film, and a second multilayer film on the defect layer in which the plurality of dielectric layers and the plurality of magnetic insulator layers are stacked alternately, the dielectric layers and the magnetic insulator layers each having a thickness equivalent to the respective thicknesses of the dielectric layers and the magnetic insulator layers in the first multilayer film, in which, in an environment without a magnetic field, a magnetic domain having a width of 200 nm or more in which, magnetization is oriented in a direction perpendicular to a surface of the support substrate is exhibited.

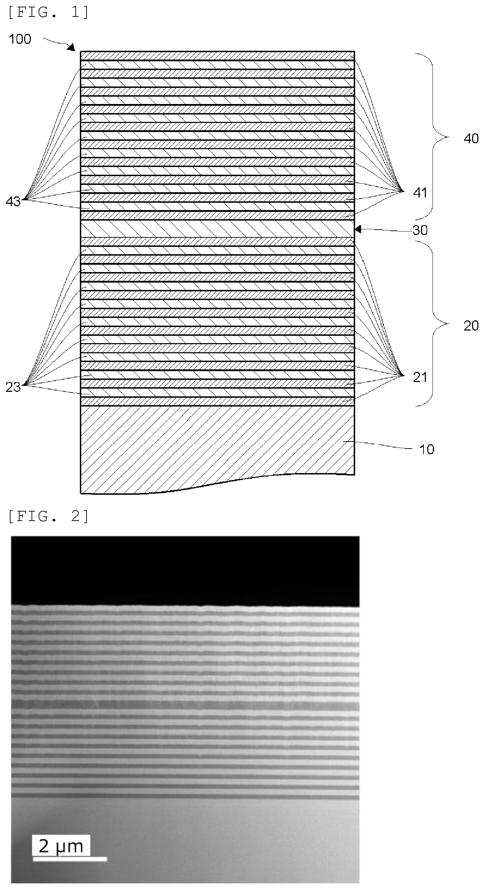

FIG. 1 shows the inventive magnetic domain structure 100. The magnetic domain structure 100 is configured with a support substrate 10, a first multilayer film 20, a defect layer 30, and a second multilayer film 40 stacked on each other, and all of the layers are composed of a material having a garnet structure. Among these, the first multilayer film 20 is configured with the plurality of dielectric layers 21 each having a constant thickness and the plurality of magnetic insulator layers 23 each having a constant thickness, in which the layers are stacked alternately. In the first multilayer film 20, the constant thickness of each of the plurality of dielectric layers 21 may have an error of about ±20%. In the first multilayer film 20, the constant thickness of each of the plurality of magnetic insulator layers 23 may also have an error of about ±20%. In addition, the second multilayer film 40 is configured with the plurality of dielectric layers 41 each having a constant thickness and the plurality of magnetic insulator layers 43 stacked alternately as in the first multilayer film 20. Each of the plurality of dielectric layers 41 and the plurality of magnetic insulator layers 43 has a thickness equivalent to the respective thicknesses of the plurality of dielectric layers 21 and the plurality of magnetic insulator layers 23 in the first multilayer film 20. In the second multilayer film 40, each of the plurality of dielectric layers 41 and each of the plurality of magnetic insulator layers 43 may also have an error of about ±20%.

The defect layer 30 is disposed between the first multilayer film 20 and the second multilayer film 40. The defect layer 30 is a layer made of a magnetic insulator material, and a thickness thereof is thicker than that of a single layer from the magnetic insulator layers 23 in the first multilayer film 20. In particular, the thickness of the defect layer 30 is preferably twice the thickness of a single layer from the magnetic insulator layers 23 in the first multilayer film 20. By making the thickness of the defect layer 30 twice the thickness of the magnetic insulator layer 23, the defect layer can function more effectively, and high light transmittance and a large magneto-optical effect can be obtained. This "twice the thickness" may have an error of about ±20%.

In addition, due to the structure of the inventive magnetic domain structure 100, an increase in a magneto-optical effect can be obtained by attaching the multilayer film portion other than the defect layer onto the support substrate when compared with a case where a single film composed of the defect layer is provided on the support substrate. The defect layer 30 can function as a defect layer when thickness thereof is thicker than the thickness of a single layer from the magnetic insulator layers 23, and the thickness thereof is not limited to twice the thickness of that of the magnetic insulator layer in the multilayer film described above. Specifically, an integral multiple of 2 times thickness is desirable, and that of 4 times, 6 times, in addition to 2 times, is preferable. However, when a thickness is greater than 1 time, while an increase rate of the magneto-optical effect is reduced, the exhibition of the magnetic domain and the increase of the magneto-optical effect can be satisfied simultaneously. Accordingly, a multiple of 3 times, 5 times, or the like is also sufficient, and a non-integral number such as 1.5 times, 3.5 times, or the like is also acceptable.

Due to the presence of the defect layer 30 (for example, a Ce:YIG layer having twice the thickness), at a design wavelength (a wavelength of light to be used for the magnetic domain structure 100), the transmittance can be enhanced, and simultaneously, a Faraday rotation angle (magnitude of a magneto-optical effect of transmitted light) can be increased. Such a layer is typically referred to as a defect layer in a magneto-optical material, and is also referred to as a defect layer in the description of the present invention.

FIG. 1 illustrates that, in the first multilayer film 20, 10 layers of the dielectric layers 21 and 9 layers of the magnetic insulator layers 23 are stacked alternately, and in the second multilayer film 40 as well, 10 layers of the dielectric layers 41 and 9 layers of the magnetic insulator layers 43 are stacked alternately. The number of alternate stacks of the present invention is required to be at least two, and the upper limit thereof is not limited. For a convenience of the production of the magnetic domain structure 100, the preferable range of the number of alternate stacking is 5 or more and 20 or less.

Furthermore, in the present invention, in an environment without a magnetic field, the magnetic domain structure 100 exhibits a magnetic domain having a width of 200 nm or more in which magnetization is oriented in a direction perpendicular to the substrate surface of the support substrate 10. The environment without a magnetic field is a state where no magnetic field is applied to the magnetic domain structure 100. In the present invention, it is found that, with a structure of the magnetic domain structure 100 as illustrated in FIG. 1 (a structure in which a nano-micro structure is introduced), high transmittance and a large magneto-optical effect can be obtained while exhibiting the magnetic domain.

In the inventive magnetic domain structure 100, the support substrate 10 is preferably made of gadolinium gallium garnet (GGG). In addition, the dielectric layers (the dielectric layers 21 in the first multilayer film 20 and the dielectric layers 41 in the second multilayer film 40) are preferably made of gadolinium gallium garnet. Moreover, the magnetic insulator layers (the magnetic insulator layers 23 in the first multilayer film 20 and the magnetic insulator layers 43 in the second multilayer film 40) are preferably made of cerium-substituted yttrium iron garnet (Ce:YIG). By using these materials, the essential magnetic domain in the inventive magnetic domain structure (the magnetic domain having a width of 200 nm or more in which the magnetization is oriented in a direction perpendicular to a substrate surface of the support substrate 10) can be more reliably exhibited.

Furthermore, in this case, the gadolinium gallium garnet constituting the dielectric layer is preferably unsubstituted with respect to gadolinium, but the gadolinium can be partially substituted with another element (for example, a rare earth element). However, it is required that epitaxial crystal growth can be performed during the production.

Moreover, in this case, Ce:YIG constituting the magnetic insulator layer is a magnetic material and an insulator, that is, a magnetic insulator. A molecular structure of YIG is based on Y₃Fe₅O₁₂, and a material having the molecular structure can be used in which a Y site or a Fe site is substituted with another element. Among the rare earth elements, Sc, La, Ce, Pr, Nd, Sm, Eu, Gd, Tb, Dy, Ho, Er, Tm, Yb, and Lu can be used as substitutional elements. In particular, it is known that when the Y site is substituted with a rare earth element, Bi or Gd, a magneto-optical effect is large. In the present invention, Ce can be selected and used particularly as a substitutional element.

It is preferable that in the first multilayer film 20 and the second multilayer film 40 of the inventive magnetic domain structure 100, when a refractive index of each of the dielectric layers 21 and 41 is defined as "n1" and a refractive index of each of the magnetic insulator layers 23 and 43 is defined as "n2", the thickness "t1" [nm] of each of the dielectric layers 21 and 41 and the thickness "t2" [nm] of each of the magnetic insulator layers 23 and 43 are represented by the following equations: $t 1 = λ / \left(4\times n1\right) ,$ and $t 2 = λ / \left(4\times n2\right)$ wherein λ is a design wavelength [nm] of light to be used for the magnetic domain structure 100.

That is, for both, it is preferable to have a relational equation: 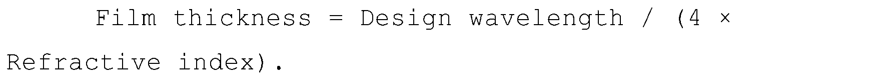 Film thickness = Design wavelength / (4 × Refractive index).

This is the same relation as that of the film thickness of a typical Bragg mirror (also referred to as a dielectric mirror, or a multilayer film mirror). By designing the thickness of each layer in this way based on the wavelength of the light being used for the magnetic domain structure 100, a more preferred aspect of the magnetic domain structure can be provided.

Moreover, in the inventive magnetic domain structure 100, all of the respective normals to crystal planes of the support substrate 10, the dielectric layers 21 and 41, and the magnetic insulator layers 23 and 43 are preferably oriented in a <111> direction. By providing such a crystal plane structure, a more preferred aspect of the magnetic domain structure 100 can be provided.

In the inventive magnetic domain structure 100, a reflective film may be disposed on a side of the support substrate 10 opposite to the first multilayer film 20. Although the structure of the present invention is for the transmitted light, by providing a reflective film (mirror) made or Aluminum or the like on a back side of the magnetic domain structure 100 (a side of the support substrate 10 opposite to the first multilayer film 20, which is below the support substrate 10 as shown in FIG. 1), the structure can function with respect to reflected light in the same way, the function thereof is not limited to the reflected light. The reflective film may be in close contact with or separated from the support substrate 10 as long as the reflective film is on the lower side of the support substrate 10.

The inventive magnetic domain structure can be deployed to many applications of the devices that employ the magneto-optical material. The magnetic domain is difficult to predict by calculation or simulation, and the prediction thereof has recently begun to be clarified only by using a large scale calculation using a supercomputer, and is difficult to estimate a specific structure size. According to the present invention, the high transmittance and the large magneto-optical effect can be obtained due to the above structure while exhibiting the magnetic domain.

As described above, examples of ripple effects of the inventive magnetic domain structure on related fields include a three-dimensional display, an optical holographic memory, and a laser switch.

(1) The three-dimensional display is expected to be deployed in the game industry, the entertainment industry, and a medical industry, each of which employs a next-generation display.
(2) The optical holographic memory is expected to be applied as a memory that stores a huge amount of data in a data center supporting artificial intelligence, autonomous driving, or the like, with low power consumption.
(3) The laser switch can increase optical power and, therefore, has been deployed in high-power laser applications. Accordingly, the laser switch is expected to be applied to optical processing and the processing industry.

Note that a multilayer film structure in which a magneto-optical material is used for a defect layer is known as a magnetophotonic crystal (for example, Non Patent Document 4). Non Patent Document 4 discloses that the multilayer film structure exhibits a high magneto-optical effect and high transmittance through calculation and experiment. However, Non Patent Document 4 does not disclose any discussion regarding a magnetic domain, and because there was no practical application at that time, no description is included regarding what types of the magnetic domain is present or absent, or even whether a magnetic domain is exhibited.

In addition, Patent Document 1 discloses a multilayer film structure as well. Although Patent Document 1 discloses characteristics in that a large magneto-optical effect can be obtained, unlike the present invention, not all components have a garnet structure, and furthermore, no reference is made to a magnetic domain.

### EXAMPLES

Hereinafter, the present invention will be more specifically described with reference to Example. However, the present invention is not limited to Example.

### [Example]

A magnetic domain structure 100 in FIG. 1, which is a structure according to the present invention, was produced. FIG. 2 shows a transmission electron microscope image of a cross-section of a sample of the magnetic domain structure 100 actually produced.

The following materials were used as specific materials. A GGG (Gadolinium Gallium Garnet) substrate was used as a support substrate 10. In addition, GGG was used as a material of magnetic insulator layers (magnetic insulator layers 23 in a first multilayer film 20, and magnetic insulator layers 43 in a second multilayer film 40). Ce:YIG (cerium-substituted yttrium iron garnet) was used as a material of both dielectric layers (dielectric layers 21 in a first multilayer film 0, and dielectric layers 41 in the second multilayer film 40) and a defect layer 30. The films in each layer were alternately stacked on the GGG substrate, serving as the support substrate 10.

As a method for forming each layer, a radiofrequency ion beam sputtering method was used. During the film formation, the sample was formed while a temperature thereof was maintained at about 900°C. Accordingly, lattice constants of the materials of the support substrate 10 and each layer were matched, and epitaxial growth was achieved. Regarding orientations of the support substrate 10 and all layers, a direction perpendicular to planes thereof was <111>.

GGG is not a magnetic material, but has a garnet structure as in yttrium iron garnet (YIG, Y₃Fe₅O₁₂). A crystal structure of GGG can be represented by Gd₃Ga₅O₁₂₋ₓ. A lattice constant of GGG is 1.238 nm, which is close to that of cerium-substituted yttrium iron garnet (Ce:YIG). Therefore, Ce:YIG (the magnetic insulator layers 23 and 43, and the defect layer 30) was successfully epitaxially grown on the support substrate 10 made of GGG and the GGG films (the dielectric layers 21 and 41).

A refractive index of GGG at a wavelength of 1064 nm is 1.89. Gadolinium in GGG in Example was unsubstituted without intentional substitution.

Moreover, Ce:YIG is a magnetic material and an insulator, namely, a magnetic insulator. A molecular structure of YIG is based on Y₃Fe₅O₁₂, and a material having the molecular structure can be used in which a Y site or a Fe site is substituted with another element. In particular, it is known that when the Y site is substituted with a rare earth, Bi, or Gd, a magneto-optical effect is large. In this Example, among rare earths, Ce was selected and used. A substitution amount of Ce in this Example is 1, and when represented by a compositional formula, it becomes Ce₁Y₂Fe₅O₁₂₋ₓ. X represents a deviation in the composition. It is generally difficult to accurately measure the content of oxygen in a molecule; accordingly, such a notation is employed. A lattice constant of this Ce:YIG is 1.243 nm. A refractive index of this Ce:YIG at a wavelength of 1064 nm is 2.20.

In this Example, the GGG layers had a thickness of 148.7±2.5 nm. The number following "±" sign represents a standard deviation of a thickness variation of all GGG layers in the structure of the magnetic domain structure 100, which was actually produced in Example.

In this Example, the Ce:YIG layers other than the defect layer 30 had a thickness of 119.5±2.6 nm. The number following "±" sign represents a standard deviation of a thickness variation of all Ce:YIG layers other than the defect layer 30 in the structure of the magnetic domain structure 100, which was actually produced in Example. However, only the 2-fold thick Ce:YIG layer constituting the defect layer 30 had a thickness of 240.0 nm.

Note that in the first multilayer film 20 and the second multilayer film 40, the thickness "t1" [nm] of each of the GGG layers (the dielectric layers 21 and 41) and the thickness "t2" [nm] of each of the Ce:YIG layers (the magnetic insulator layers 23 and 43) were determined as values calculated by $t 1 = λ / \left(4\times n1\right) ,$ and $t 2 = λ / \left(4\times n2\right) ,$ when a refractive index of each of the dielectric layers 21 and 41 was defined as "n1" and a refractive index of each of the magnetic insulator layers 23 and 43 was "n2". In this case, a design wavelength λ was set to 1064 nm.

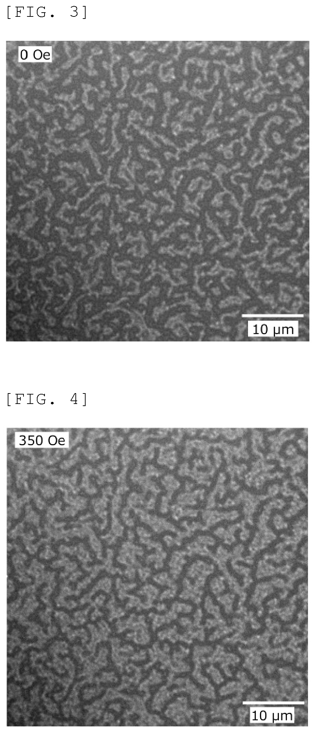

FIG. 3 shows a view from above of a sample surface of the magnetic domain structure 100 produced in this way. For observation here, a microscope referred to as a polarizing microscope, in which magnitude of a magneto-optical effect is expressed by a shade. This indicates that a polarity of magnetization is reversed between a black portion and a white portion in FIG. 3, which corresponds to a magnetic domain. From FIG. 3, it can be recognized that magnetic domains having a width of about 200 to 1000 nm are exhibited. When an image in FIG. 3 was obtained, a magnetic field was not applied to the sample (in an environment without a magnetic field (or under the geomagnetic environment). A magnitude of the magnetic field is described as 0 Oe (oersted).

Moreover, FIG. 4 shows a view from above a sample surface of the magnetic domain structure 100 when applying a magnetic field having a magnitude of 350 Oe to the sample of the magnetic domain structure 100. The conditions were the same as those in FIG. 3, except that the magnetic field was applied. In FIG. 4, when compared with FIG. 3, the sizes of the magnetic domains on the surface of the magnetic domain structure 100 have changed, and it can be recognized that the contrast between black and white is not due to unevenness or the like, on the surface of the sample.

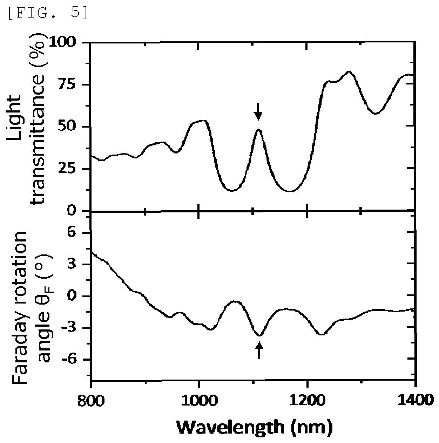

Moreover, FIG. 5 shows results of measuring transmittance and a Faraday rotation angle (the magnitude of the magneto-optical effect of transmitted light) when irradiating light perpendicular to the film surface of the sample of the magnetic domain structure 100, produced in this Example. It can be recognized that the transmittance and the Faraday rotation angle are increased at a wavelength, which is indicated by arrows in FIG. 5. This is caused by the presence of the defect layer 30 constituted by 2-fold thick Ce:YIG. As shown in FIG. 5, the transmittance was about 50%, and the magnitude of the Faraday rotation was about 3.5°. The wavelength indicated by the arrows was a wavelength where the increase of the magneto-optical effect was confirmed.

It is known that when the thickness of each layer of the Ce:YIG layers exceeds 1 µm, as the thickness increases, the magnetic domains are no longer generated because a stress and strain in the film is relaxed. On the other hand, the structure shown in the Example according to a configuration of the present invention has a thickness of each layer made of Ce:YIG, which is as thin as 300 nm or less, and thus, the stress and strain having a sufficient magnitude remains. Consequently, the magnetic domains are exhibited.

At the same time, in the structure shown in Example, total number of Ce:YIG layers can be increased; therefore, a large magneto-optical effect can be obtained while exhibiting the magnetic domains. Based only on the above idea, Ce:YIG and GGG are to be simply stacked alternately with each other. Then, the alternately stacked structure becomes a Bragg mirror and reflects light at a design wavelength, leading to an extremely low transmittance, which is close to 0. This is what is referred to as a photonic bandgap. The transmittance is decreased in this way, and, therefore, the device applications as shown in the above (1) to (3) are impossible. Therefore, the defect layer 30 becomes essential.

When the defect layer 30 is present, a fine band region that propagates light, which is referred to as a defect layer mode (or a localized mode), appears within the photonic bandgap. Consequently, a large magneto-optical effect can be obtained while maintaining high transmittance. In Example described above, the defect layer 30, having twice the thickness of that of the first multilayer film 20, was exemplified; however, even when the defect layer 30 is configured to be thicker than the first multilayer film 20 (that is, with a thickness larger than 1-fold or an integral multiple of 2-fold, or the like), the magneto-optical effect can be obtained.

Based on the above, in the inventive magnetic domain structure 100, a structure having high transmittance and a large magneto-optical effect was successfully produced while exhibiting magnetic domains.

The present description includes the following embodiments.
[1]: A magnetic domain structure including a multilayer film on a support substrate, the multilayer film including a plurality of dielectric layers and a plurality of magnetic insulator layers stacked alternately, wherein
   the support substrate, the dielectric layers, and the magnetic insulator layers are all made of a material having a garnet structure,
   the magnetic domain structure comprises:
      a first multilayer film on the support substrate in which the plurality of dielectric layers each having a constant thickness and the plurality of magnetic insulator layers each having a constant thickness are stacked alternately;
      a defect layer formed on the first multilayer film and comprised of the magnetic insulator layer that is thicker than a single layer from the magnetic insulator layers in the first multilayer film; and
      a second multilayer film on the defect layer in which the plurality of dielectric layers and the plurality of magnetic insulator layers are stacked alternately, the dielectric layers and the magnetic insulator layers each having a thickness equivalent to the respective thicknesses of the dielectric layers and the magnetic insulator layers in the first multilayer film, wherein
      in an environment without a magnetic field, a magnetic domain having a width of 200 nm or more in which magnetization is oriented in a direction perpendicular to a surface of the support substrate is exhibited.
[2]: The magnetic domain structure of the above [1], wherein
   the thickness of the defect layer is twice the thickness of a single layer from the magnetic insulator layers in the first multilayer film.
[3]: The magnetic domain structure of the above [1] or [2], wherein
   the support substrate is made of gadolinium gallium garnet,
   the dielectric layers are made of gadolinium gallium garnet, and
   the magnetic insulator layers are made of cerium-substituted yttrium iron garnet.
[4]: The magnetic domain structure of the above [3], wherein
   the gadolinium gallium garnet is unsubstituted with respect to gadolinium, or the gadolinium is partially substituted with another element.
[5]: The magnetic domain structure of any of the above [1] to [4], wherein
   in the first multilayer film and the second multilayer film, when a refractive index of each of the dielectric layers is defined as "n1" and a refractive index of each of the magnetic insulator layers is defined as "n2", the thickness "t1" [nm] of each of the dielectric layers and the thickness "t2" [nm] of each of the magnetic insulator layers are represented by the following equations: $t 1 = λ / \left(4\times n1\right) ,$ and $t 2 = λ / \left(4\times n2\right)$ wherein λ is a design wavelength [nm] to be used for the magnetic domain structure.
[6]: The magnetic domain structure of any of the above [1] to [5], wherein
   all of respective normals to crystal planes of the support substrate, the dielectric layers, and the magnetic insulator layers are oriented in a <111> direction.
[7]: The magnetic domain structure of any of the above [1] to [6], wherein
   a reflective film is disposed on a side of the support substrate opposite to the first multilayer film.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A magnetic domain structure comprising a multilayer film on a support substrate, the multilayer film comprising a plurality of dielectric layers and a plurality of magnetic insulator layers stacked alternately, wherein
the support substrate, the dielectric layers, and the magnetic insulator layers are all made of a material having a garnet structure,
the magnetic domain structure comprises:
a first multilayer film on the support substrate in which the plurality of dielectric layers each having a constant thickness and the plurality of magnetic insulator layers each having a constant thickness are stacked alternately;
a defect layer formed on the first multilayer film and comprised of the magnetic insulator layer that is thicker than a single layer from the magnetic insulator layers in the first multilayer film; and
a second multilayer film on the defect layer in which the plurality of dielectric layers and the plurality of magnetic insulator layers are stacked alternately, the dielectric layers and the magnetic insulator layers each having a thickness equivalent to the respective thicknesses of the dielectric layers and the magnetic insulator layers in the first multilayer film, wherein
in an environment without a magnetic field, a magnetic domain having a width of 200 nm or more in which magnetization is oriented in a direction perpendicular to a surface of the support substrate is exhibited.

2. The magnetic domain structure according to claim 1, wherein
the thickness of the defect layer is twice the thickness of a single layer from the magnetic insulator layers in the first multilayer film.

3. The magnetic domain structure according to claim 1, wherein
the support substrate is made of gadolinium gallium garnet,
the dielectric layers are made of gadolinium gallium garnet, and
the magnetic insulator layers are made of cerium-substituted yttrium iron garnet.

4. The magnetic domain structure according to claim 3, wherein
the gadolinium gallium garnet is unsubstituted with respect to gadolinium, or the gadolinium is partially substituted with another element.

5. The magnetic domain structure according to any one of claims 1 to 4, wherein
in the first multilayer film and the second multilayer film, when a refractive index of each of the dielectric layers is defined as "n1" and a refractive index of each of the magnetic insulator layers is defined as "n2", the thickness "t1" [nm] of each of the dielectric layers and the thickness "t2" [nm] of each of the magnetic insulator layers are represented by the following equations: $t 1 = λ / \left(4\times n1\right) ,$ and $t 2 = λ / \left(4\times n2\right)$ wherein λ is a design wavelength [nm] to be used for the magnetic domain structure.

6. The magnetic domain structure according to claim 1, wherein
all of respective normals to crystal planes of the support substrate, the dielectric layers, and the magnetic insulator layers are oriented in a <111> direction.

7. The magnetic domain structure according to claim 1, wherein
a reflective film is disposed on a side of the support substrate opposite to the first multilayer film.
